# EUROPÄISCHE PATENTSCHRIFT

(11) **EP 1 874 965 B1**
(45) Veröffentlichungstag und Bekanntmachung des Hinweises auf die Patenterteilung: **17.02.2010**
(21) Anmeldenummer: 06723421.1
(22) Anmeldetag: 15.03.2006
(51) Int. Cl.: C13D 1/08, C13D 1/02, A23F 3/18, A23F 5/26

(54) **TEMPERATURFÜHRUNG BEI DER ALKALISCHEN EXTRAKTION**
THERMAL CONDUCTION DURING ALKALINE EXTRACTION
REGULATION DE LA TEMPERATURE PENDANT UNE EXTRACTION ALCALINE

(30) Priorität: 15.04.2005 DE 102005017446
(43) Veröffentlichungstag der Anmeldung: 09.01.2008
(73) Patentinhaber: Südzucker Aktiengesellschaft Mannheim/Ochsenfurt, 68165 Mannheim (DE)
(72) Erfinder: ARNOLD, Jochen, 67283 Obrigheim (DE); FRENZEL, Stefan, 69469 Weinheim (DE); MICHELBERGER, Thomas, 67269 Grünstadt (DE)
(74) Vertreter: Schwahn, Hartmut
(86) Internationale Anmeldenummer: PCT/EP2006/002344
(87) Internationale Veröffentlichungsnummer: WO 2006/108481

(56) Entgegenhaltungen:
- EP-A- 1 002 879
- EP-A- 1 472 932
- WO-A-2004/055219
- DE-C1- 19 837 958
- FR-A1- 2 334 395
- GB-A- 782 652
- US-A- 6 149 957
- PATENT ABSTRACTS OF JAPAN Bd. 2003, Nr. 02, 5. Februar 2003 (2003-02-05) & JP 2002 306075 A (UCC UESHIMA COFFEE CO LTD), 22. Oktober 2002 (2002-10-22)
- PATENT ABSTRACTS OF JAPAN Bd. 2003, Nr. 12, 5. Dezember 2003 (2003-12-05) & JP 2004 024094 A (UCC UESHIMA COFFEE CO LTD), 29. Januar 2004 (2004-01-29)
- KUBASIEWICZ A.; LEKAWSKI W.: 'Heat exchange in the trough diffusion process' GAZETA CUKROWNICSA Bd. 83, Nr. 3, Seiten 61 - 64

## Beschreibung

Die vorliegende Erfindung betrifft Verfahren zur Extraktion und Gewinnung von Inhaltsstoffen aus biologischem Material, ausgewählt aus Zuckerrübe, Rübenschnitzeln oder Rüben, Zichorie und Zuckerrohr.

Pflanzen enthalten in der Regel Inhaltsstoffe, insbesondere auch wasserlösliche Inhaltsstoffe, wie Saccharose, Inulin oder Stärke. Diese Inhaltsstoffe sind in Pflanzenzellen eingeschlossen und durch biologische Membranen abgetrennt, die verhindern, dass Zellsaft austreten kann. Als Vorstufe für die extraktive Aufarbeitung des Zellmaterials ist es deshalb erforderlich, diese Membranen zu zerstören, so dass der Zellsaft austreten kann. Diese sogenannte Denaturierung des Pflanzenmaterials wird üblicherweise durch Erhitzen des Pflanzenmaterials auf Temperaturen über 70°C bewirkt. Dadurch ergibt sich, dass das Pflanzenmaterial zuerst erhitzt wird und dieses denaturierte erhitzte Pflanzenmaterial anschließend einer Extraktion unterzogen wird. Diese läuft so ab, dass das Extraktionsmittel im Gegenstrom zu dem Schnitzelmaterial geführt wird, wobei das Schnitzelmaterial den Zucker abgibt und das Extraktionsmittel den Zucker aufnimmt. Das Extraktionsmittel ist in der Regel kälter als das Pflanzenmaterial nach der thermischen Denaturierung. Dadurch ergibt sich, dass die Temperatur des Schnitzelmaterials entlang der Extraktionsstrecke sinkt, das heißt, das Schnitzelmaterial kühlt sich entlang der Extraktionsstrecke sukzessive ab. Nach den bekannten Extraktionsverfahren werden die geschnitzelten Rüben möglichst rasch auf Temperaturen über 70°C erwärmt und im Gegenstrom mit dem Extraktionsmedium, meist Wasser, zum Beispiel Frischwasser oder Kondensat, extrahiert. Dadurch bildet sich entlang der Extraktionsstrecke ein Temperaturgradient aus, der nach der Erwärmung der Schnitzel vom Schnitzeleintrag bis zum Schnitzelaustrag abfallend ist.

Diese Verfahrensweise bedingt allerdings, dass die Extraktion in einem Temperaturbereich durchgeführt wird (65°C bis 75°C), in dem bereits Veränderungen der Textur der Schnitzelgerüstsubstanz und auch chemische Veränderungen am Schnitzelmaterial auftreten. Die Folge hiervon ist, dass Nichtzuckerbestandteile aus dem Schnitzelmaterial herausgelöst werden und die Reinheit des Extrakts erniedrigt wird. Gleichermaßen wird durch die hohe Temperatur die Textur des Schnitzelmaterials geschwächt. Dies ist von Bedeutung, da in der Regel als nächster Schritt der Verarbeitung eine mechanische Entwässerung des Schnitzelmaterials über zum Beispiel Doppelspindelpressen durchgeführt wird. Die mit der Temperaturbelastung des Schnitzelmaterials einhergehende Schwächung der Schnitzelstruktur beeinträchtigt die Entwässerbarkeit des Schnitzelmaterials.

Die Extraktion von Inhaltsstoffen aus biologischem Material ist z.B. in FR 2334395, GB 782652, EP 1002879 und DE 19837958 beschrieben.

Das der vorliegenden Erfindung zugrundeliegende technische Problem liegt also insbesondere darin, ein Verfahren bereitzustellen, in dem möglichst vollständig und sehr selektiv gewünschte Inhaltsstoffe aus biologischem Material, ausgewählt aus Zuckerrübe, Rübenschnitzeln oder Rüben, Zichorie und Zuckerrohr, herausgelöst werden, wobei gleichzeitig eine hohe Reinheit des Extraktes und eine möglichst geringe Beeinträchtigung der Schnitzelstruktur bei kostengünstiger Verfahrensweise ermöglicht wird.

Die Erfindung ist durch die Ansprüche gekennzeichnet und wird im Folgenden beschreiben und löst dieses Problem durch die Bereitstellung eines Verfahrens zur Extraktion von Inhaltsstoffen, insbesondere wasserlöslichen Inhaltsstoffen, zum Beispiel Zucker, aus biologischem Material, ausgewählt aus Zuckerrübe, Rübenschnitzeln oder Rüben, Zichorie und Zuckerrohr, wobei das biologische Material in einer Extraktionsanlage im zeitlichen Verlauf der Extraktion einem steigenden Temperaturgradienten ausgesetzt wird, das heißt, dass das biologische Material im Verlauf der Extraktion vom Materialeintrag zum Materialaustrag, erwärmt wird. Insbesondere sieht die Erfindung daher ein Verfahren zur Extraktion von biologischem Material, insbesondere Rüben, bevorzugt Rübenschnitzeln, in einer Rübenextraktionsanlage vor, wobei die Temperatur des biologischen Materials, insbesondere der Rüben, oder bevorzugt der Rübenschnitzel, in der Rübenextraktionsanlage im Verlauf der Extraktion vom Schnitzeleintrag zum Schnitzelaustrag erhöht wird, das heißt ein steigender oder inverser Temperaturgradient entlang der Extraktionsstrecke beziehungsweise während der Extraktion aufgebaut wird.

Im Zusammenhang mit der vorliegenden Erfindung wird unter dem biologischen Material biologisches Material verstanden, welches zur Gewinnung von Inhaltsstoffen, insbesondere wasserlöslichen Inhaltsstoffen, einer Extraktion mittels eines Extraktionsmittels unterzogen werden kann. Das biologische Material Pflanzenmaterial wird aus Zuckerrübe, Rüben, Zuckerrohr oder Zichorie sowie Teilen oder Stücken davon, insbesondere Rübenschnitzel, ausgewählt. Das biologische Material kann auch in Form von Suspensionen ebenso wie in fester Form vorliegen, beispielsweise als Rübenschnitzel oder als Rübenschnitzel-Saft-Gemisch, wobei der Saft ein durch Vorbehandlung des biologischen Materials wie Schneiden, thermisches Denaturieren oder Elektroporieren erhaltener Zellsaft sein kann.

Im Zusammenhang mit der vorliegende Erfindung ist ein Extraktionsmittel ein Mittel, welches zur Extraktion von Inhaltsstoffen aus biologischem Material dienen kann, beispielsweise Wasser, insbesondere Frischwasser oder auch Kondensat aus einer Zuckerfabrik.

Im Zusammenhang mit der vorliegenden Erfindung wird unter Extraktion ein Trennverfahren zum Herauslösen von bestimmten Inhaltsstoffen verstanden, insbesondere Zucker, aus festen oder flüssigen Substanzgemischen, insbesondere biologischem Material mit Hilfe geeigneter Lösungsmittel, wobei zwischen dem Lösungsmittel und dem gelösten Stoff, das heißt dem Inhaltsstoff des biologischen Materials keine chemischen Reaktionen stattfinden. Bei der Gewinnung von wasserlöslichen Inhaltsstoffen aus biologischem Material wird wie erwähnt bevorzugt Wasser in flüssiger Phase als Extraktionsmittel eingesetzt, beispielsweise bei der Gewinnung von Zucker aus Zuckerrüben beziehungsweise Zuckerrübenschnitzeln. In einer Variante können zusätzlich oder ausschließlich fettlösliche Inhaltsstoffe unter der Verwendung von überwiegend unpolaren und/oder organischen Lösungsmitteln aus dem biologischen Material gewonnen werden.

Die vorliegende Erfindung sieht also vor, dass das zu extrahierende biologische Material gegebenenfalls nach Vorbehandlung, zum Beispiel Zerschneiden und/oder einer Elektroporation und/oder einer thermischen Denaturierung mit einer bestimmten Anfangstemperatur einem Extraktionsverfahren zugeführt wird, und wobei diese Anfangstemperatur im zeitlichen Verlauf der Extraktion vom Anfang bis zum Ende erhöht wird. Die Erfindung sieht vor, dass die Temperatur des biologischen Materials während der Extraktion, oder räumlich gesehen, entlang der Extraktionsstrecke erhöht wird, vorzugsweise um mindestens 10°C, mindestens 15°C, mindestens 20°C, mindestens 25°C oder bevorzugt mindestens 30°C. Dies kann in besonders bevorzugter Ausführungsform dadurch geschehen, dass das Extraktionsmittel dem Extraktionsverfahren und damit dem zu extrahierenden biologischen Material in gegenüber dem biologischen Material wärmerer Form zugeführt wird. In bevorzugter Weise wird das Extraktionsmittel im Gegenstromprinzip dem biologischen Material zugeführt, sodass das frische Extraktionsmittel zuerst mit dem sich bereits am Ende der Extraktionsstrecke befindenden biologischen Material zusammentrifft, dort zu einer Erwärmung des Extraktionsguts führt und im Verlauf der weiteren Extraktion Wärme in zunehmend verringertem Umfang an das biologische Material bis zum Anfang der Extraktionsstrecke abgibt. Dadurch ergibt sich eine vorteilhafte Umkehrung des Temperaturprofils mit einer ansteigenden Temperatur des biologischen Materials entlang der Extraktionsstrecke. Diese Vorgehensweise hat zudem den Vorteil, dass das Gegenstromprinzip nicht nur für die Stoffströme gilt, sondern auch für die im Gegenstrom geführten Wärmeströme. Dies ermöglicht eine Verringerung des Wärmebedarfs der Extraktionsanlage. In besonders bevorzugter Ausführungsform ist vorgesehen, dass das Extraktionsmedium bei Eintritt in die Extraktion, das heißt vorzugsweise beim Eintritt in den Endbereich der Extraktion, eine Temperatur von 40 bis 100°C, vorzugsweise 50 bis 80°C aufweist, wobei die Temperatur des Extraktionsmediums im Verlauf der weiteren Extraktion, die vorzugsweise im Gegenstromverfahren stattfindet, durch Abgabe von Wärme an das Extraktionsgut, das heißt das biologische Material reduziert wird, und wobei sich im Gegenzug das biologische Material im Rahmen der Extraktion erwärmt.

Die erfindungsgemäße Vorgehensweise führt zu einer verbesserten Entwässerbarkeit des Rübengewebes, zu einer Erhöhung der Extraktionsausbeute und zu einer Erhöhung der Reinheit des Extraktes, insbesondere durch die vorgesehene, im Rahmen des inversen Temperaturgradienten erreichte, schonende Behandlung des biologischen Materials, insbesondere Rübengewebes, und aufgrund des effektiveren Zellaufschlusses. Die erhöhte Temperatur am Ende des Extraktionsprozesses ermöglicht es, auch die letzten Zuckerreste extrahieren zu können, wobei gleichzeitig eine hohe Abpressbarkeit der Schnitzel und niedrige Zuckerverluste gewährleistet werden.

Die Erfindung sieht in bevorzugter Weise vor, dass die Temperatur des biologischen Materials, insbesondere der Rübenschnitzel am Beginn der Extraktion, das heißt am Materialeintrag, insbesondere Schnitzeleintrag, von 0°C bis 40°C, vorzugsweise 25 bis 36°C beträgt. Die Temperatur wird im Verlauf der Extraktion vom Materialeintrag, insbesondere Schnitzeleintrag, zum Materialaustrag, insbesondere Schnitzelaustrag, aus der Extraktionsanlage erhöht, und zwar vorzugsweise auf eine Temperatur von 40 bis 80°C. In einer besonders bevorzugten Ausführungsform ist vorgesehen, dass die Temperatur des biologischen Materials, insbesondere der Rübenschnitzel beim Materialaustrag, insbesondere Schnitzelaustrag, aus der Extraktionsanlage eine Temperatur von 40 bis 60°C, vorzugsweise 45 bis 55°C aufweist. In einer weiteren bevorzugten Ausführungsform ist in besonders vorteilhafter Weise vorgesehen, dass die Temperatur des biologischen Materials, insbesondere der Rübenschnitzel beim Materialaustrag, insbesondere Schnitzelaustrag, aus der Extraktionsanlage eine Temperatur von 60 bis 80°C, vorzugsweise 65 bis 75°C aufweiset.

In einer weiteren bevorzugten Ausführungsform ist vorgesehen, dass das eingesetzte biologische Material in zerkleinerter Form, zum Beispiel in Form von Rübenschnitzeln, die, wie erläutert, in bevorzugter Ausführung elektroporiert wurden, eingesetzt wird. Es kann auch vorgesehen sein, dass das für die erfindungsgemäße Extraktion einzusetzende biologische Material vor der Extraktion thermisch aufgeschlossen wurde. In einer weiteren bevorzugten Ausführungsform ist vorgesehen, dass dem eingesetzten biologischen Material, insbesondere den elektroporierten Rübenschnitzeln, Hilfsstoffe zugesetzt wurden, insbesondere Kalk und/oder Kalkmilch.

In einer weiteren besonders bevorzugten Ausführungsform ist vorgesehen, dass die durchgeführte Extraktion eine alkalische Extraktion ist. Demgemäß wird in bevorzugter Weise das biologische Material bei einem pH-Wert von ca. 7 bis ca. 14 extrahiert.

In einer bevorzugten Variante findet die Extraktion als alkalische Extraktion statt, insbesondere unter Verwendung von Alkalisierungsmitteln wie Kalkmilch und/oder Branntkalk. Unter "alkalisch" wird in diesem Zusammenhang der pH-Wert eines wässrigen Mediums von ca. pH 7 bis ca. pH 14 (bei 20°C) verstanden. In einer bevorzugten Variante wird die alkalische Extraktion bei pH 7,5 bis pH 12, insbesondere bei circa pH 11, beispielsweise pH 11,5 durchgeführt.

Bei einer alkalischen Extraktion können unerwünschte chemische Reaktionen mit dem biologischen Material nicht in allen Fällen ausgeschlossen werden, insbesondere kann ein Anteil von löslichem hochmolekularem Catcium-Pektat gebildet werden. Üblicherweise werden diese unerwünschten chemischen Reaktionen dadurch reduziert, dass die Alkalisierung des Pflanzenmaterials in Form einer Vorbehandlung mit Kalkmilch oder Calcium-Saccharat-Lösung bei verhältnismäßig tiefen Temperaturen (unter 20°C) durchgeführt wird. Bei bekannten Extraktionstemperaturen von circa 70 bis 75°C treten dennoch unerwünschte chemische Reaktionen der alkalischen Extraktion auf, sodass zum Teil Calcium-Pektat gebildet wird, welches die Filtration des vorzugsweise im Verlauf einer Kalkmilch-Kohlensäure-Saftreinigung gewonnenen Schlammsaftes wesentlich erschwert. Demgegenüber vermindert die erfindungsgemäß bevorzugte alkalische Extraktion, welche bei niedrigen Temperaturen durchgeführt wird, die Bildung dieser hochmolekularen Verbindungen, wodurch bei der Filtration des Schlammsaftes, insbesondere des bei der Zuckerrübenextraktion durch Saftreinigung erhaltenen Schlammsaftes 1, ein Filtrationskoeffizient von weniger als 1 cm²/sec erreicht wird.

Der Eintrag der Alkalität auf das biologische Material, beispielsweise in Form von Kalkmilch, Calciumhydroxid, Calciumsaccharat oder Branntkalk, findet zum Beispiel bevorzugt bereits unmittelbar vor oder nach der gegebenenfalls stattfindenden Elektroporation statt, insbesondere in einem Zwischenbunker vor der weiteren Verarbeitung des biologischen Materials oder sogar vor der Elektroporation. In einer weiteren Variante wird die Alkalität unmittelbar vor der Durchführung der Extraktion eingebracht. Erfindungsgemäß bevorzugt wird die Alkalität normalerweise in Form wässriger Lösungen in das biologische Material eingebracht, bevorzugt aufgesprüht. In einer weiteren Variante wird zum Zwecke des Eintrags der Alkalität auf das biologische Material mindestens ein alkalischer Stoff, insbesondere Kalk wie Branntkalk, als Feststoff, bevorzugt in Pulverform, in das Verfahren eingebracht.

Durch den Eintrag der Alkalität auf das biologische Material wird eine Verminderung des lnfektionsrisikos des biologischen Materials und die Erhöhung der mikrobiologischen Stabilität des biologischen Materials und des abgetrennten Zellsafts während der Verarbeitung erreicht. Die mikrobiologische Stabilität liegt dabei üblicherweise bei circa 10⁴ KBE/ml.

Erfindungsgemäß bevorzugt ist der erfindungsgemäß eingesetzte Extraktor ein Turmextraktor. In einer Variante ist der Extraktor ein Doppelschnecken-Extraktor, wie ein DDS-Extraktor. In einer weiteren Variante ist der Extraktor ein Trommelzellenextraktor, wie eine RT-Trommel.

In besonderem Maße eignet sich daher das Verfahren der Erfindung für die alkalisch geführte Extraktion von Pflanzenmaterial. Dabei werden die Schnitzel in einer bevorzugten Ausführungsform der Erfindung vor der Extraktion in der Kälte, bei Temperaturen unter 20°C, mit Kalk oder Kalkmilch, also alkalischer Calciumhydroxidlösung, oder Calcium-Saccharat-Lösung vorbehandelt. Die Vorbehandlung bei Temperaturen unter 20°C stabilisiert das Rübenpektin (Gerüstsubstanz) und ermöglicht eine anschließende Extraktion bei höheren Temperaturen. Diese Vorbehandlung erhöht auch die Aufnahmefähigkeit der Gerüstsubstanz für Calciumionen und die Entwässerbarkeit der Schnitzel wird dadurch deutlich erhöht. Zudem wird ein Schutz vor mikrobieller Verstoffwechselung des Zuckers erreicht.

In einer besonders bevorzugten Form der vorliegenden Erfindung ist vorgesehen, dass das für die Elektroporation einzusetzende biologische Material vor der erfindungsgemäß durchzuführenden Extraktion einer Elektroporation unterzogen worden ist, das heißt in einem leitfähigen Medium einem Hochspannungsfeld ausgesetzt worden ist. Es kann vorgesehen sein, dass das Hochspannungsfeld in an sich bekannter Weise, beispielsweise über spannungsführende Elektroden durch Anlegen einer Spannung, insbesondere einer Hochspannung über das biologische Material erzeugt wird.

Eingesetzt werden können impulsförmige Hochspannungsverläufe, aber auch periodische Wechselfelder und Gleichspannungsfelder sind vorgesehen. Die Feldstärke beträgt zum Beispiel etwa 0,1 bis 20 kV/cm, insbesondere 1 bis 5 kV/cm, bevorzugt 2 bis 4 kV/cm. In einer Variante ist die Leitfähigkeit des Mediums, worin sich das biologische Material bei der Elektroporation befindet, so an die Leitfähigkeit des biologischen Materials angepasst, dass ein optimaler Feldlinienverlauf innerhalb des biologischen Materials erreicht wird, vorzugsweise beträgt die Leitfähigkeit circa 0,2 bis 10 mS/cm, insbesondere 0,2 bis 2,1 mS/cm oder 2,6 bis 6,0 mS/cm. In einer besonders bevorzugten Variante werden zur Elektroporation ganze Früchte, beispielsweise ganze Zuckerrüben eingesetzt, um gegebenenfalls dieses Material nach der Elektroporation zu zerkleinern. Selbstverständlich ist in einer bevorzugten Ausführungsform auch vorgesehen, das biologische Material der Elektroporation auch in zerkleinerter Form zuzuführen, beispielsweise bei der Zuckerrübe in Form von Rübenschnitzeln.

In einer weiteren Ausführungsform ist vorgesehen, dass aus dem erfindungsgemäß extrahierten biologischen Material, also zum Beispiel aus dem sich nach der Extraktion der Schnitzel ergebenden Schnitzel-Saft-Gemisch, Inhaltsstoffe in an sich üblicher Weise aufgereinigt und gewonnen werden. Erfindungsgemäß bevorzugt wird aus dem aus der Extraktion erfindungsgemäß behandelter Zuckerrüben erhaltenen Extrakt im weiteren Prozess in einer mehrstufigen Kristallisationsanlage der Zucker gewonnen. Das extrahierte biologische Material, insbesondere die extrahierten Rübenschnitzel, werden anschließend noch mechanisch entwässert und beispielsweise mit Melasse vermischt und bevorzugt nach der thermischen Trocknung als Futtermittel, insbesondere als Futtermittelpellets, vermarktet.

In einer weiteren bevorzugten Variante wird im erfindungsgemäßen Verfahren vor oder nach der Extraktion dem biologischen Material mindestens ein Hilfsstoff zugeführt. Im Zusammenhang mit der vorliegenden Erfindung wird unter einem "Hilfsstoff" eine Zusammensetzung oder chemische Reinsubstanz verstanden, welche im gewonnenen Inhaltsstoff, bevorzugt dem gewonnenen Lebensmittel, keinerlei Funktion innehat. Dies sind Betriebsstoffe wie Kondensat, aber auch Prozesswasser, Lösemittel, Desinfektionsmittel wie Formaldehyd oder Schaumdämpfungsmittel. Bevorzugt sind dies auch Flockungshilfsmittel wie kationische oder anionische Flockungshilfsmittel, Substanzen für den Eintrag von Alkalität und/oder von Calciumionen wie Kalkmilch, Branntkalk, Calciumhydroxid, Calciumsaccharat, Calciumsulfat und andere Calciumsalze und/oder Aluminiumsalze. Der erfindungsgemäß bevorzugt zugeführte mindestens eine Hilfsstoff wird normalerweise in Form einer Lösung in das biologische Material eingebracht, bevorzugt aufgesprüht. In einer weiteren Variante wird der mindestens eine Hilfsstoff als Feststoff, bevorzugt in Pulverform, eingebracht. Die eingetragenen Hilfsstoffe bewirken auch eine Vorreinigung des abgetrennten Zellsafts.

Bevorzugter Gegenstand der vorliegenden Erfindung ist auch ein Verfahren zur Erhöhung der Abpressbarkeit von extrahiertem biologischem Material, insbesondere von Zuckerrübenschnitzeln, und damit des bei der Abpressung erreichbaren Trockensubstanzanteils, **dadurch gekennzeichnet, dass** in einem ersten Schritt eine Elektroporation des biologischem Materials, insbesondere von Zuckerrüben oder Zuckerrübenschnitzeln, und in einem weiteren Schritt eine erfindungsgemäße alkalische Extraktion des elektroporierten biologischen Materials mit inversem beziehungsweise steigendem Temperaturgradient, insbesondere elektroporierter Zuckerrüben beziehungsweise Zuckerrübenschnitzel, durchgeführt wird und anschließend extrahiertes biologisches Material mit erhöhter Abpressbarkeit erhalten wird.

Ein weiterer bevorzugter Gegenstand der vorliegenden Erfindung ist auch ein Verfahren zum Erhalt von extrahiertem biologischem Material, insbesondere von extrahierten Zuckerrübenschnitzeln, mit hohem Trockensubstanzanteil, vorzugsweise von circa 38% TS, bevorzugt circa 40 bis 42 %, **dadurch gekennzeichnet, dass** in einem ersten Schritt das biologische Material, insbesondere Zuckerrüben oder Zuckerrübenschnitzel, elektroporiert werden, in einem weiteren Schritt das elektroporierte biologische Material, insbesondere elektroporierte Zuckerrüben beziehungsweise Zuckerrübenschnitzel, erfindungsgemäß alkalisch mit steigendem beziehungsweise inversem Temperaturgradienten extrahiert werden, in einem nachfolgenden Schritt das elektroporierte biologische Material, insbesondere elektroporierte Zuckerrüben beziehungsweise Zuckerrübenschnitzel, vorzugsweise in an sich bekannter Weise abgepresst wird und anschließend extrahiertes biologisches Material mit erhöhtem Trockensubstanzgehalt erhalten wird.

Weitere vorteilhafte Ausgestattungen ergeben sich aus den Unteransprüchen.

Die Erfindung wird anhand des folgenden Beispiels und der dazugehörigen Figuren näher erläutert.

Die Figuren zeigen:
- Figur 1: eine grafische Darstellung der Temperaturführung in der Extraktionsanlage in einer erfindungsgemäßen und einer üblichen Ausführung,
- Figur 2: eine grafische Darstellung der Ergebnisse von Pressversuchen mit unterschiedlich behandelten extrahierten Schnitzeln und
- Figur 3: eine grafische Darstellung der Extraktionsverluste und Pressenverluste bei unterschiedlich behandelten Schnitzeln,

### Beispiel:

Im Rahmen von Technikumsversuchen (Verarbeitung ca. 1 t Zuckerrüben) wurden die erfindungsgemäße und die bekannte Verfahrensweise erprobt. Die Versuchsanlage bestand aus einer Technikums-Elektroporationsanlage (Durchsatz: 10 t/h), einem Technikums-Schneidwerkzeug, um die Zuckerrüben zu zerkleinern, zu schnitzeln, einer mit Dampf beheizbaren Trogschnecken-Extraktionsanlage (Typ DDS) und einer Doppelspindelpresse.

### Herkömmliches Verfahren (alkalische Extraktion)

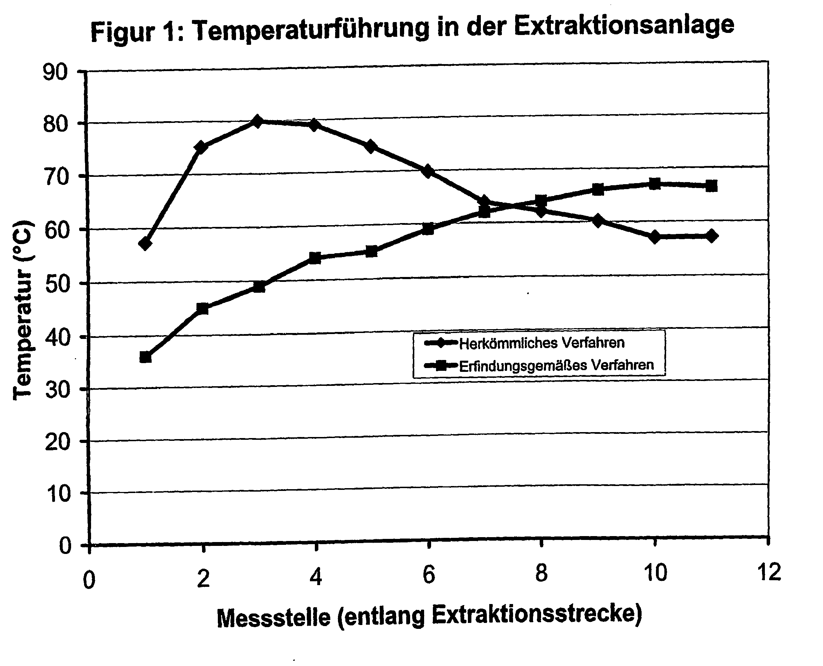

Zunächst wurden die Zuckerrüben mit Alkalisierungsmittel besprüht und in dem Technikums-Schneidwerkzeug zerkleinert. Die Alkalisierung erfolgte zweckmäßigerweise in dem Schneidwerkzeug. Durch Besprühung der Rüben in dem Schneidwerkzeug konnte eine zufriedenstellende Verteilung der Calciumhydroxidlösung auf dem zu behandelnden Schnitzelmaterial erreicht werden. Dabei wurde darauf geachtet, dass dieser Prozessschritt in der Kälte in einem Temperaturbereich unter 20 °C durchgeführt wurde, damit unerwünschte Nebenreaktionen (Bildung von löslichem Calciumpektat) vermieden wurden. Die alkalisierten Zuckerrübenschnitzel wurden in den Doppelschneckenextraktor überführt. Die alkalisierten Zuckerrübenschnitzel wurden danach in dem Doppelschneckenextraktor über eine Zeitdauer von zwei Stunden extrahiert. Dabei wurde der angestrebte Temperaturverlauf über die Beheizung der Abschnitte des Heizmantels eingestellt (siehe Figur 1). Der Temperaturverlauf in der Extraktionsanlage war entlang der 11 Messstellen vom Materialeintrag zum Materialaustrag wie folgt (Temperatur des biologischen Materials):
57,2 / 75 / 79,9 / 79 / 74,6 / 69,8 / 63,9 / 62,1 / 60,2 / 57,1 / 57,2

Die Zugabe der alkalischen Schnitzel erfolgte in den Trogextraktor bei Messstelle 1 und die Zugabe des Extraktionsmittels (Kondensat) erfolgt bei Messstelle 10 (Messstelle 11: Abtropfzone).

Dabei wurden die Zuckerrübenschnitzel entlang der Extraktionsstrecke (Messpunkt 1 bis 4) zunächst überbrüht, um eine thermische Denaturierung und Öffnung der Zellmembranen zu bewirken (Messstelle 1 bis 4). Danach folgte die eigentliche Extraktion, bei der die Extraktionstemperatur wieder leicht reduziert wurde (Messstelle 5 bis 11).

### Erfindungsgemäßes Verfahren

Ca. 1 t Zuckerrüben wurden in der Technikums-Elektroporationsanlage (Durchsatz ca. 10 t/h) mit Elektroimpulsen behandelt (Zellöffnung durch Elektroplasmolyse). Danach wurden die Zuckerrüben mit Alkalisierungsmittel besprüht und in der Kälte in dem Technikums-Schneidwerkzeug zerkleinert.

Danach wurden die Zuckerrübenschnitzel in den Technikums-Extraktionsapparat überführt und über 2 Stunden extrahiert. Dabei wurde der Temperaturverlauf im Extraktor allein über die Aufheizung des Extraktionsfrischwassers auf eine bestimmte Temperatur (im vorliegenden Fall 70 °C) und die Gegenstromführung von Extraktionsgut (Schnitzel) und Extraktionsmittel (Frischwasser) eingestellt (siehe Figur 1). Der Temperaturverlauf in der Extraktionsanlage war entlang der 11 Messstellen wie folgt (Temperatur des biologischen Materials):
36 / 45 / 49 / 54 / 55 / 59 / 62 / 64 / 66 / 67 / 66,5

Auf die indirekte Beheizung des Extraktors über den Heizmantel-Wärmetauscher wurde vollständig verzichtet.

### Ergebnisse und allgemeine Schlussfolgerungen

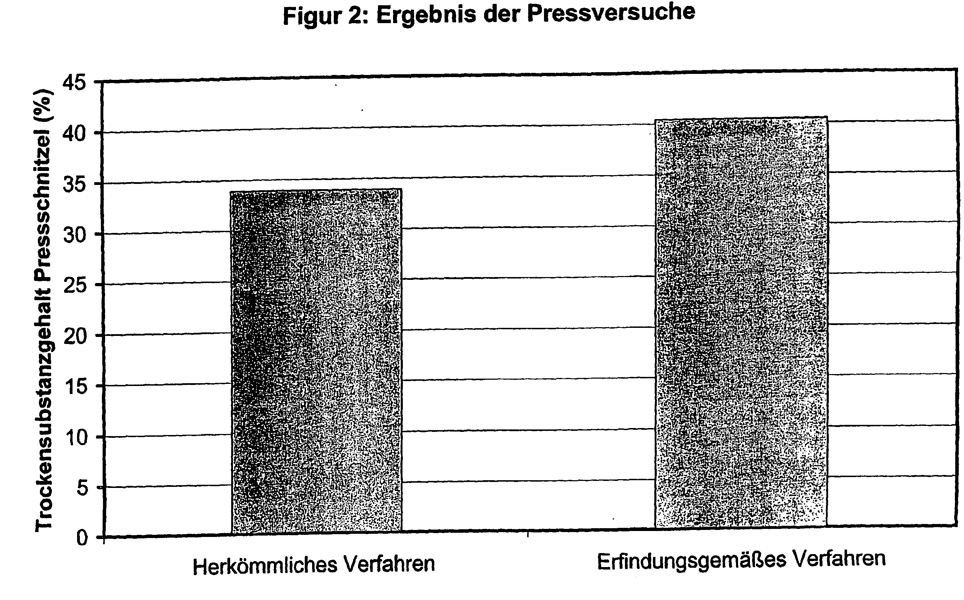

Die Untersuchungsergebnisse zeigen, dass die nach dem erfindungsgemäßen Verfahren erzeugten extrahierten Schnitzel (Trockensubstanzgehalt der Pressschnitzel in %: 40,4) deutlich besser entwässerbar waren als die nach dem herkömmlichen Verfahren erzeugten extrahierten Schnitzel (Trockensubstanzgehalt der Pressschnitzel in %: 33,9) (Figur 2). Offensichtlich bleibt bei dem erfindungsgemäßen Verfahren die Schnitzeltextur besser erhalten. Insbesondere bei der alkalisch geführten Extraktion wird durch die niedrigen Anfangstemperaturen in dem ersten Bereich der Extraktion, in dem die wirksame Alkalität noch sehr hoch ist, eine schonendere Behandlung des Schnitzelmaterials erreicht, welche im Experiment eine deutliche Steigerung der Entwässerbarkeit der extrahierten Schnitzel bewirkte.

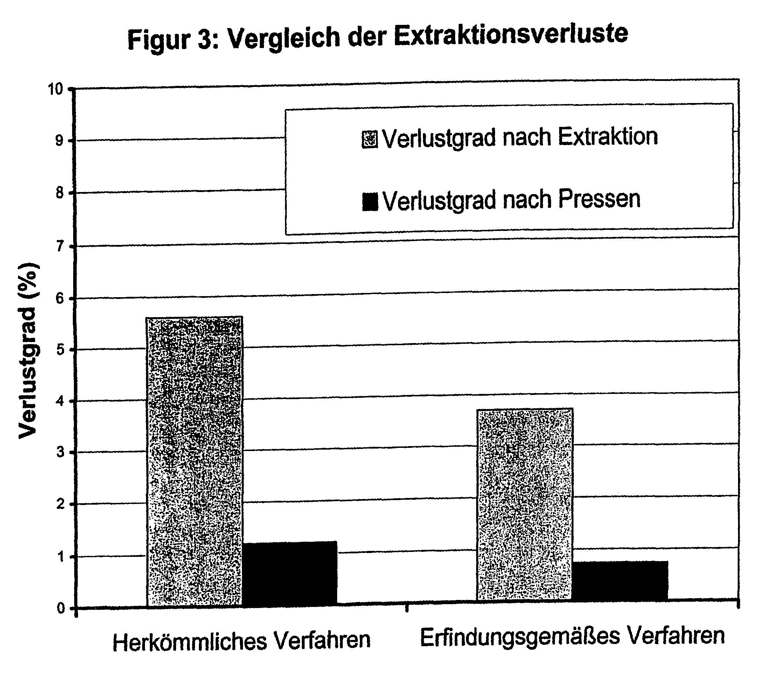

Das erfindungsgemäße Verfahren ergab in dem Experiment auch ein besseres Extraktionsergebnis (Figur 3). Dargestellt sind die sog. Verlustgrade der extrahierten Schnitzel und der Pressschnitzel, Der Verlustgrad nach der Extraktion betrug bei dem herkömmlichen Verfahren 5,6 % und bei dem erfindungsgemäßen Verfahren 3,7 %. Der Verlustgrad nach dem Pressen betrug bei dem herkömmlichen Verfahren 1,2 % und bei dem erfindungsgemäßen Verfahren 0,74 %. Der Verlustgrad nach der Extraktion bedeutet den Massenanteil der Saccharose im zu extrahierenden Gut, der nicht extrahiert wird und somit in den extrahierten Schnitzeln verbleibt bzw. der Verlustgrad nach dem Pressen bedeutet den Massenanteil der Saccharose im zu extrahierenden Gut, der in den Pressschnitzeln verbleibt. Bei dem erfindungsgemäßen Verfahren wurden bei vergleichbaren Extraktions- und Pressenbedingungen niedrigere Verlustgrade erreicht.

Die Verbesserung der Extraktionsausbeute gegenüber dem herkömmlichen Verfahren ist insofern überraschend, als zuvor angenommen wurde, dass aufgrund der geringeren durchschnittlichen Extraktionstemperatur die Triebkraft für den Stoffübergang und somit die Extraktionsausbeute sinkt. Üblicherweise geht man davon aus, dass der entscheidende Vorgang bei der Extraktion die Diffusion der Saccharosemolekfile aus der Pflanzenzelle ist. Der Diffusionskoffizient von Saccharose in wässrigen Lösungen ist deutlich temperaturabhängig. Bei dem erfindungsgemäßen Verfahren wurde allerdings gefunden, dass trotz der Absenkung der mittleren Extraktionstemperatur bessere Extraktionsergebnisse erzielt wurden. Dies kann möglicherweise damit zusammenhängen, dass aufgrund der Zellöffnung durch Elektroplasmolyse am Anfang des Extraktionsprozesses konvektive Transportvorgänge eine Rolle spielen, dass ein Ausfließen des Zellsafts stattfindet, welches durch die Zellöffnung durch Elektroporation und den wirksamen Druck im Zellinneren (Turgor) bereits bei tiefen Temperaturen ermöglicht wird, ohne dass die Textur der Schnitzel beeinträchtigt wird. Am Ende des Extraktionsprozesses spielen eindeutig Diffusionsprozesse für die Extraktion der letzten Zuckerreste eine Rolle. Dieser Vorgang wird eindeutig durch hohe Temperaturen begünstigt.

Demzufolge macht es auch allgemein über dieses konkrete Beispiel hinaus Sinn, bei der Extraktion von elektroporiertem Pflanzenmaterial bei insgesamt recht niedrigen Temperaturen, zum Beispiel einem Temperaturbereich von 0°C bis 50°C einen inversen Temperaturgradienten einzustellen. Durch die Anhebung der Extraktionstemperatur am Ende der Extraktion werden die letzten Zuckerreste effektiver und unter schonenderen Bedingungen extrahiert als dies bei dem herkömmlichen Verfahren der Fall ist. Die Führung der Extraktion bei derart niedrigen Temperaturen ist nur sinnvoll, wenn vor allem eine möglichst schonende Behandlung des Pflanzenmaterials angestrebt wird und weniger Wert auf eine möglichst vollständige Ausbeutung des Zuckers gelegt wird. Falls jedoch eine möglichst hohe Extraktionsausbeute angestrebt wird, sollte die Endtemperatur der Extraktion auf ca. 70°C angehoben werden.

## Patentansprüche

1. Verfahren zur Extraktion von biologischem Material, ausgewählt aus Zuckerrübe, Rübenschnitzeln oder Rüben, Zichorie und Zuckerrohr, in einer Extraktionsanlage, wobei die Temperatur des biologischen Materials in einem steigenden Temperaturgradienten im zeitlichen Verlauf der Extraktion von Anfang bis Ende erhöht wird.

2. Verfahren nach Anspruch 1, wobei die Temperatur des biologischen Materials beim Materialeintrag in einem Bereich von 0°C bis 40°C liegt.

3. Verfahren nach einem der vorhergehenden Ansprüche, wobei die Temperatur des biologischen Materials beim Materialeintrag in einem Bereich von 25 bis 36°C liegt.

4. Verfahren nach einem der vorhergehenden Ansprüche, wobei die Temperatur des biologischen Materials beim Materialaustrag in einem Bereich von 40 bis 80°C liegt.

5. Verfahren nach einem der vorhergehenden Ansprüche, wobei die Temperatur des biologischen Materials beim Materialaustrag in einem Bereich von 60 bis 90°C liegt.

6. Verfahren nach einem der vorhergehenden Ansprüche, wobei die Temperatur des biologischen Materials beim Materialaustrag in einem Bereich von 65 bis 75°C liegt.

7. Verfahren nach einem der vorhergehenden Ansprüche, wobei die Temperatur des biologischen Materials beim Materialaustrag in einem Bereich von 40 bis 60°C liegt.

8. Verfahren nach einem der vorhergehenden Ansprüche, wobei die Temperatur des biologischen Materials beim Materialaustrag in einem Bereich von 45 bis 55°C liegt.

9. Verfahren nach einem der vorhergehenden Ansprüche, wobei das biologische Material vor der Extraktion einer Elektroporation unterzogen worden ist.

10. Verfahren nach einem der vorhergehenden Ansprüche, wobei dem biologischen Material vor der Extraktion Hilfsstoffe, bevorzugt Kalk und/oder Kalkmilch und/oder eine Calciumsaccharatlösung, zugeführt worden sind.

11. Verfahren nach Anspruch 10, wobei die Behandlung mit Kalk, Kalkmilch oder Calciumsaccharatlösung bei unter 20°C stattfindet.

12. Verfahren nach einem der vorhergehenden Ansprüche, wobei die Extraktion eine alkalische Extraktion ist.

13. Verfahren nach einem der vorhergehenden Ansprüche, wobei die Temperatur des biologischen Materials während der Extraktion durch das Extraktionsmedium graduell erhöht wird, vorzugsweise im Gegenstromverfahren.

14. Verfahren nach einem der vorhergehenden Ansprüche, wobei das Extraktionsmedium zu Beginn der Extraktion eine Temperatur von 50 bis 80°C aufweist.

15. Verfahren nach einem der vorhergehenden Ansprüche, wobei das Extraktionsmedium Wasser ist.

16. Verfahren zur Erhöhung der Abpressbarkeit von extrahiertem biologischem Material, wobei das biologische Material einer Elektroporation und anschließend einer Extraktion nach einem der Ansprüche 1 bis 15 unterzogen wird.

17. Verfahren zum Erhalt von extrahiertem biologischem Material, **dadurch gekennzeichnet, dass** biologisches Material einer Extraktion nach einem der Ansprüche 1 bis 15 unterzogen wird.

## Claims

1. A process for extracting biological material, selected from sugar beet, beet chips or beets, chicory and sugar cane, in an extraction device, wherein the temperature of the biological material is increased during the time course of the extraction from the beginning until the end with an increasing temperature gradient.

2. The process according to claim 1, wherein the temperature of the biological material at the material feed is in a range from 0°C to 40°C.

3. The process according to one of the preceding claims, wherein the temperature of the biological material at the material feed is in a range from 25 to 36°C.

4. The process according to one of the preceding claims, wherein the temperature of the biological material at the material discharge is in a range from 40 to 80°C.

5. The process according to one of the preceding claims, wherein the temperature of the biological material at the material discharge is in a range from 60 to 90°C.

6. The process according to one of the preceding claims, wherein the temperature of the biological material at the material discharge is in a range from 65 to 75°C.

7. The process according to one of the preceding claims, wherein the temperature of the biological material at the material discharge is in a range from 40 to 60°C.

8. The process according to one of the preceding claims, wherein the temperature of the biological material at the material discharge is in a range from 45 to 55°C.

9. The process according to one of the preceding claims, wherein, before the extraction, the biological material has been subjected to an electroporation.

10. The process according to one of the preceding claims, wherein, before the extraction, aids, preferably lime and/or milk of lime and/or a calcium saccharate solution, have been fed to the biological material.

11. The process according to claim 10, wherein the treatment with lime, milk of lime or calcium saccharate solution takes place below 20°C.

12. The process according to one of the preceding claims, wherein the extraction is an alkaline extraction.

13. The process according to one of the preceding claims, wherein the temperature of the biological material during the extraction is gradually increased via the extraction medium, preferably in the countercurrent flow process.

14. The process according to one of the preceding claims, wherein, at the beginning of the extraction, the extraction medium has a temperature of 50 to 80°C.

15. The process according to one of the preceding claims, wherein the extraction medium is water.

16. A process for increasing the pressability of extracted biological material, wherein the biological material is subjected to an electroporation and subsequently to an extraction according to one of claims 1 to 15.

17. A process for obtaining extracted biological material, **characterized in that** biological material is subjected to an extraction according to one of claims 1 to 15.

## Revendications

1. Procédé d'extraction de matière biologique, sélectionnée parmi la betterave à sucre, les morceaux de betterave ou les betteraves, la chicorée et la canne à sucre, dans une installation d'extraction, dans lequel la température de la matière biologique est augmentée dans un gradient de température croissant lors du déroulement temporel de l'extraction du début à la fin.

2. Procédé selon la revendication 1, dans lequel la température de la matière biologique se situe dans une plage de 0°C à 40°C lors de l'alimentation de la matière.

3. Procédé selon l'une quelconque des revendications précédentes, dans lequel la température de la matière biologique se situe dans une plage de 25 à 36°C lors de l'alimentation de la matière.

4. Procédé selon l'une quelconque des revendications précédentes, dans lequel la température de la matière biologique se situe dans une plage de 40 à 80°C lors de l'évacuation de la matière.

5. Procédé selon l'une quelconque des revendications précédentes, dans lequel la température de la matière biologique se situe dans une plage de 60 à 90°C lors de l'évacuation de la matière.

6. Procédé selon l'une quelconque des revendications précédentes, dans lequel la température de la matière biologique se situe dans une plage de 65 à 75°C lors de l'évacuation de la matière.

7. Procédé selon l'une quelconque des revendications précédentes, dans lequel la température de la matière biologique se situe dans une plage de 40 à 60°C lors de l'évacuation de la matière.

8. Procédé selon l'une quelconque des revendications précédentes, dans lequel la température de la matière biologique se situe dans une plage de 45 à 55°C lors de l'évacuation de la matière.

9. Procédé selon l'une quelconque des revendications précédentes, dans lequel la matière biologique a été soumise à une électroporation avant l'extraction.

10. Procédé selon l'une quelconque des revendications précédentes, dans lequel des adjuvants, de préférence de la chaux et/ou du lait de chaux et/ou une solution de saccharate de calcium, ont été ajoutés à la matière biologique avant l'extraction.

11. Procédé selon la revendication 10, dans lequel le traitement avec de la chaux, du lait de chaux ou une solution de saccharate de calcium a lieu à moins de 20°C.

12. Procédé selon l'une quelconque des revendications précédentes, dans lequel l'extraction est une extraction alcaline.

13. Procédé selon l'une quelconque des revendications précédentes, dans lequel la température de la matière biologique est progressivement augmentée pendant l'extraction par le milieu d'extraction, de préférence dans un procédé à contre-courant.

14. Procédé selon l'une quelconque des revendications précédentes, dans lequel le milieu d'extraction présente une température de 50 à 80°C au début de l'extraction.

15. Procédé selon l'une quelconque des revendications précédentes, dans lequel le milieu d'extraction est de l'eau.

16. Procédé d'augmentation de la capacité d'extraction par pression de matière biologique extraite, dans lequel la matière biologique est soumise à une électroporation, puis à une extraction selon l'une quelconque des revendications 1 à 15.

17. Procédé d'obtention de matière biologique extraite, **caractérisé en ce que** la matière biologique est soumise à une extraction selon l'une quelconque des revendications 1 à 15.
